# EUROPÄISCHE PATENTSCHRIFT

(11) **EP 1 800 946 B1**
(45) Veröffentlichungstag und Bekanntmachung des Hinweises auf die Patenterteilung: **11.04.2012**
(21) Anmeldenummer: 06025753.2
(22) Anmeldetag: 13.12.2006
(51) Int. Cl.: B60P 1/64, B60P 7/13, B61D 45/00

(54) **Containerverriegelung**
Container locking
Verrouillage de container

(30) Priorität: 24.12.2005 DE 102005062339
(43) Veröffentlichungstag der Anmeldung: 27.06.2007
(73) Patentinhaber: 1. RMM Entwicklungsgesellschaft mbH & Co. KG, 21244 Buchholz i.d.N. (DE)
(72) Erfinder: Metternich, Heinz-Rüdiger, 21279 Eversen-Heide (DE)
(74) Vertreter: Hansen, Jochen

(56) Entgegenhaltungen:
- DE-A1- 2 539 081
- US-A- 5 160 224

## Beschreibung

Die Erfindung bezieht sich auf eine Vorrichtung zur Verriegelung eines Containers auf der Ladefläche eines Straßenfahrzeuges oder eines Eisenbahntragwagens, aufweisend mindestens einen Verriegelungszapfen, der in entriegeltem Zustand über eine der Öffnungen in einem der Eckbeschläge des Containers einführbar und in verriegeltem Zustand den Container über die Öffnung des Eckbeschlages hintergreifende Vorsprünge sichert und aufweisend einen Mechanismus zur Betätigung des Verriegelungszapfens. Eine Vorrichtung dieser Art ist aus DE 2539081 A bekannt.

Es ist bekannt, Container auf einem Straßenfahrzeug zu befestigen, indem Verriegelungsteile in die Eckbeschläge des Containers hineingebracht werden und dort durch Verriegelung, Spreizen oder Verschwenken den Eckbeschlag und damit den Container auf dem Fahrzeug befestigen. So können beispielsweise die Verriegelungsteile über Gewindebolzen in die Verriegelungslage gebracht werden, d. h. die Verriegelung kann von Hand durchgeführt werden. Es ist auch bekannt, die Verriegelung von Containern auf Fahrzeugen mit Hilfe von pneumatisch wirkenden Einrichtungen zu bewerkstelligen. Hierzu sind Pneumatikzylinder erforderlich, die die gewünschten Bewegungen des Verriegelungsteils der Verriegelungseinrichtung durchführen. Bei Lastkraftwagen ist die Versorgung der pneumatischen Einrichtung mit Druckluft unproblematisch, weil Lastkraftwagen von Hause aus über eine Druckversorgung, für die Bremsen verfügen.

Die vorliegende Erfindung beschäftigt sich hingegen mit dem Problem, selbsttätige Containerverriegelungen für solche Fahrzeuge zu schaffen, die über keine Energiequelle und insbesondere auch keine Druckluftversorgung verfügen. Es handelt sich hierbei nicht nur um Straßenfahrzeuge, sondern insbesondere um Bahnfahrzeuge, deren Brems-Druckluftversorgung nicht aktiv ist, wenn beispielsweise Be- und Entladungsvorgänge durchgeführt werden, also eine Energieversorgung durch die Lokomotive nicht zur Verfügung steht. Bei derartigen Fahrzeugen wäre eine separate Druckluftversorgung mit einem erheblichen Aufwand verbunden, weil beispielsweise Bahntransportwagen jeweils mit einer Mehrzahl von Verriegelungsstellen für Eckbeschläge versehen sind, je nachdem welche Containergrößen zur Beladung in Frage kommen.

Durch die vorliegende Erfindung ist nun eine Verriegelungseinrichtung für Container auf Fahrzeugen geschaffen worden, die ohne Fremdenergie auskommt und darüber hinaus auch auf einfachste Art und Weise aus der verriegelten in die entriegelte Lage gebracht werden kann.

Eine besondere Ausführungsform der Erfindung ist dadurch gekennzeichnet,
dass auf der Ladefläche des Fahrzeuges mindestens ein auf das Gewicht eines aufgesetzten Containers ansprechender 'Weg-Kraft-Wandler (10) angeordnet ist, dessen Kraft zur Betätigung des Verriegelungszapfens einsetzbar ist,
dass der Weg-Kraft-Wandler als Balg (10) strömungsmäßig ausgebildet, auf dessen nach oben weisender Fläche der Container (31) aufsetzbar ist,
dass der Balg (10) mit einem von außen her zu öffnenden Rückschlagventil (20) ausgebildet ist
und eine weitere dadurch,
dass der Weg-Kraft-Wandler als Spiralfeder oder Tellerfeder ausgebildet ist und bei Belastung durch einen Container (31) die Kraft zur Betätigung des Verriegelungszapfens liefert.

Die Erfindung wird nachstehend anhand der Zeichnung beispielsweise erläutert.
- Fig. 1: zeigt eine schaubildliche Ansicht der Vorrichtung gemäß der Erfindung im unbelasteten Zustand.
- Fig. 2: zeigt eine schaubildliche Ansicht der Vorrichtung gemäß der Erfindung im belasteten Zustand, jedoch aus einer diametralen Sicht im Vergleich zur Fig. 1.
- Fig. 3: zeigt einen Schaltplan für die einzelnen pneumatischen Leitungen für die Vorrichtung gemäß der Erfindung.

In den Figuren ist mit 11 eine Montageplatte bezeichnet, auf der die wesentlichen Teile der Vorrichtung gemäß der Erfindung montiert sind. Diese Platte wird zweckmäßigerweise an einem Fahrzeug für den Transport von Containern befestigt, und zwar in einer gewissen Höhe etwas unterhalb der Ladeplattform, jedoch im Wesentlichen parallel zu dieser.

Auf der Montageplatte 11 sind die folgenden Elemente angebracht: Ein Balg 10, eine mit dem Eckbeschlag eines Containers zusammenarbeitende Verriegelungseinrichtung 12 sowie ein Antrieb 15 für die Betätigung der Verriegelungseinrichtung 12.

Die Verriegelungseinrichtung 12 weist einen bekannten Verriegelungsteil 14 auf, der im Prinzip die Form eines nach oben stehenden Vorsprunges hat, der jedoch in vertikaler Richtung beweglich ist und mit Mitteln versehen ist, um im Inneren eines Eckbeschlages mit Hilfe von ausfahrbaren oder verschwenkbaren Teilen den Eckbeschlag und damit einen Container 30 für den Transport zu sichern.

Im Zusammenhang mit der vorliegenden Erfindung kommt jede Verriegelung in Frage, die über einen Pneumatikantrieb betätigt werden kann, d. h. deren ausfahrbarer Teil in einen Eckbeschlag eines Containers eingefahren werden kann, dort in Verriegelungsstellung gebracht und von dieser Verriegelungsstellung ausgehend auch wieder aus dem Eckbeschlag herausgefahren werden kann, wozu ein gesteuerter Pneumatikantrieb eingesetzt wird, um alle erforderlichen Bewegungen durchzuführen. In dem montierten Zustand der Montageplatte 11 ragt der Kopf des Verriegelungsteils 14 etwas über die Ladefläche (nicht gezeigt) eines Fahrzeuges nach oben hinaus, wie dies bei bekannten sog. absenkbaren Verriegelungen der Fall ist.

Der Balg 10, der aus einem geeigneten Elastomer gebildet ist, steht in seinem unbelastetem Zustand ebenfalls um eine gewisse Höhe über die Ebene der Ladefläche des Fahrzeuges hinaus etwas vor. Er kann jedoch unter dem Gewicht eines Containers 30 zusammengedrückt werden, so dass er im belasteten Zustand mit seiner oberen Fläche etwa mit der Oberfläche der Ladefläche des Fahrzeuges fluchtet. Derartige Bälge sind bekannt. Sie weisen einen gummiartig verformbaren Teil auf, der ausgehend von der unbelasteten Gestalt seine Form derartig verändern kann, dass seine Oberfläche in gewisser Weise Absenkbewegungen durchführt. Bei der vorliegenden Erfindung ist der Balg 10 so dimensioniert und eingesetzt worden, dass in seinem Inneren unter der Last ein Druck entsteht, der ausreichend groß ist, um die Betätigungseinrichtung 15 für die Verriegelung 12 betätigen zu können. Die Dimensionierung erfolgt so, dass selbst ein leerer Container mit seinem Gewicht einen ausreichenden Druck erzeugen kann. In der gezeigten Ausführungsform ist für eine einzige Betätigungsvorrichtung 15 ein einzelner Balg 10 vorgesehen. Es ist jedoch auch denkbar, einen entsprechend dimensionierten Balg vorzusehen, der für alle vier Verriegelungsvorrichtungen für die Eckbeschläge eines Containers ausreichend ist.

In der Figur sind keine Schutzeinrichtungen gezeigt, die verhindern sollen, dass durch falsches Aufsetzen des Containers oder eine seitliche Bewegung des Containers der Balg 10 nicht gleichmäßig von oben her, sondern seitlich beansprucht wird und dadurch eventuell zerstört werden kann. Es ist als Schutz etwa an eine Wippe gedacht oder eine zylindrische Umschließung des Balges.

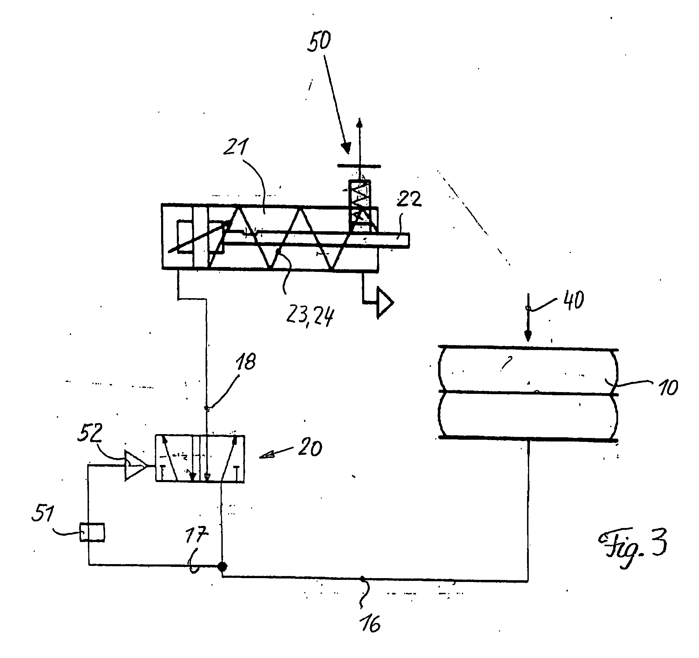

Der Balg 10 ist mit einer Druckluftleitung 16 verbunden, die zu einem Ventil 20 geführt ist. Es handelt sich hierbei um eine Ar t Rückschlagventil, das über eine Entlüftung verfügt. Es ist ebenso denkbar, hier ein sog. 5-2-Wege-Ventil einzusetzen, wie dies im Zusammenhang mit der Figur 3 nachfolgend erläutert wird. Entsprechend ist (Fig. 3) die Leitung 16 zu dem ersten Eingang des Ventils 20 geführt, wobei in der in Figur 3 gezeigten Stellung die Leitung 16 nicht mit dem Ausgang 18 des Ventils 20 strömungsmäßig verbunden ist.

In der Leitung 16, die vom Balg 10 kommt, ist eine Verzweigung 17 vorgesehen, die über ein Zeitglied 51 zu einem Auslassventil 52 geführt ist.

Wird nun der Balg 10 durch Aufsetzen eines Containers 30 belastet, so wirkt auf seinen Oberfläche eine Kraft 40, die dementsprechend einen Druck erzeugt, der, wie bereits beschrieben, zum Ventil 20 übertragen wird. Es wird später erläutert, wie das Ventil 20 mit seinem beweglichen Ventilteil betätigt wird. Hier sei darauf hingewiesen, dass bei Betätigung des Ventils 20 eine Verbindung der Leitung 16 mit der Ausgangsleitung 18 hergestellt wird, so dass der pneumatische Druck im Balg 10 nicht nur in den Leitungen 16 und 17 ansteht, sondern nun auch in der Leitung 18 zu einer federbelasteten Kolben-Zylinderanordnung 21 geführt wird. In Figur 3 ist schematisch der Zylinder gezeigt und ein in ihm beweglicher Kolben. An dem Kolben ist eine Kolbenstange 22 befestigt. Außerdem wirkt der Kolben, wenn er über die Leitung 18 linksseitig unter Druck gesetzt wird, gegen zwei Federn 23 und 24 und drückt diesen zusammen. Schematisch ist eine Rasteinrichtung 50 gezeigt und durch diese Darstellung soll gezeigt werden, dass der Kolben einen gewissen Weg nach rechts zurücklegen kann, d. h. die Kolbenstange in ihrer Längsrichtung verschoben werden kann, bis eine federbelastete Rasteinrichtung in die Kolbenstange einrastet und damit jeden weiteren Weg der Kolbenstange 22 verhindert. Wie diese Kraftübertragung auf den Verriegelungsvorgang einwirkt, wird nachfolgend noch beschrieben werden:
Das Zeitglied 51 ist so einteilt, dass es eine gewisse Zeit nach der Betätigung des Ventilteils des Ventils 20 das Ventil 52 öffnet und damit die gesamte Anlage wieder druckfrei macht. In dieser Situation ist der Balg 10 unter Atmosphärendruck und auch der Kolben 21 selbst wird nicht mehr belastet, jedoch kann die Kolbenstange 22 ihre Raststellung nicht verlassen.

Dies ist auch die Situation, in der ein Container 30 mit Hilfe der Verriegelungsvorrichtung zu Transportzwecken fest verriegelt worden ist, und zwar unabhängig davon, ob ein pneumatischer Druck im Balg 10 entsteht oder nicht. Soll der Container 30 vom Fahrzeug weggenommen werden, so muss die Verriegelungsvorrichtung betätigt werden und dies geschieht über die Rasteinrichtung 50, in dem diese von außen entweder von Hand oder über irgendeine Art Fremdeinwirkung betätigt wird. Dadurch führen die Kräfte der Federn 23 und 24 den Kolben in die in Figur 3 gezeigte Lage zurück.

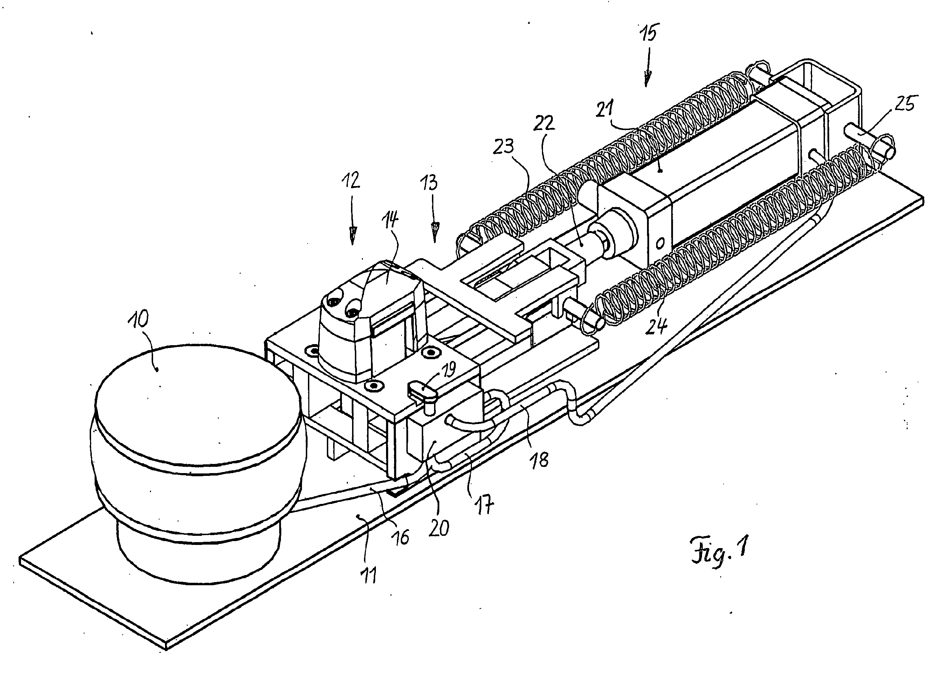

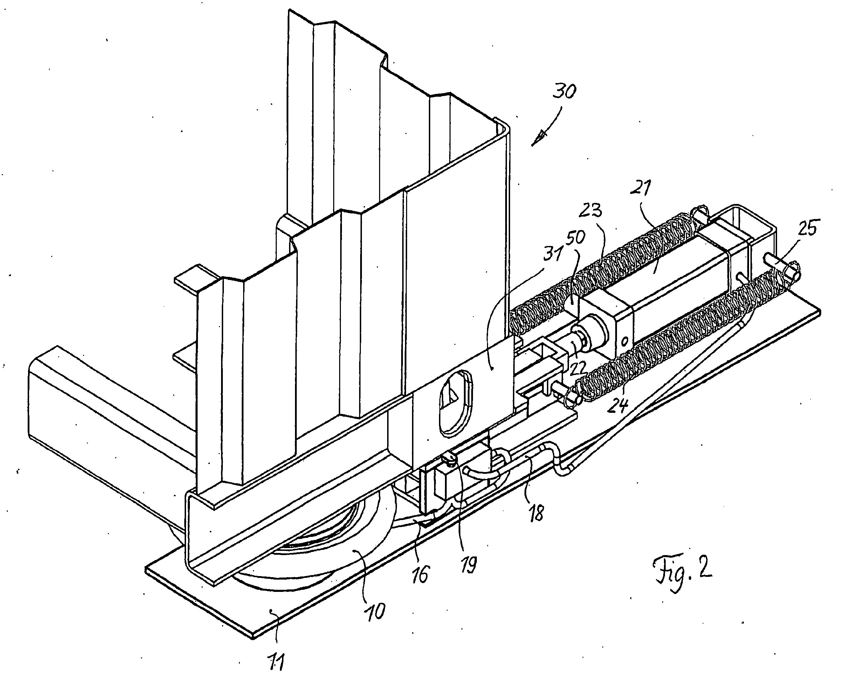

In den Figuren 1 und 2 ist ein Druckschieber 19 gezeigt. Dieser spricht auf die Belastung durch einen Container 30 und sorgt dafür, dass der Ventilteil des Ventils 20 aus der in Figur 3 gezeigten Lage nach rechts verschoben wird. Derartige Druckschieber und entsprechende Ventile sind bekannt und werden hier zu dem Zweck eingesetzt, einen Container 30 dann - und nur dann - zu verriegeln, wenn er richtig auf ein Fahrzeug aufgesetzt wird, d. h. den Balg 10 zusammendrückt und die untere Öffnung des Eckbeschlages des Containers von dem Verriegelungsteil 14 erreicht bzw. durchdrungen werden kann.

In Figur 2 ist die Lage gezeigt, in welcher ein Container 30 vollständig auf die Plattform eines Fahrzeuges aufgesetzt ist. So ist zu erkennen, dass der Balg 10 seine zusammengedrückte Form angenommen hat. Der Druckschieber 19 ist betätigt worden. Nun kann der Eckbeschlag 31 mit Hilfe der Betätigungseinrichtung 13 und dem Antrieb 15 mit den bereits erwähnten Teilen verriegelt werden. Die Federn 23 und 24 sind über Stifte mit dem Gehäuse des Zylinders 21 bei 25 verbunden, wobei es sich hier nur um eine schematische Darstellung handelt.

Der in Figur 2 gezeigte Container 30 ist nur zu einem kleinen Teil wiedergegeben worden. Es sind lediglich der eine Eckbeschlag 31 und die Tragkonstruktion sowie die Seitenwände des Containers zu erkennen. Desgleichen ist der Betätigungsteil 13 der Verriegelungseinrichtung 15 in Fig. 1 lediglich schematisch dargestellt, weil für die eigentliche Verriegelung ein solcher bekannter Mechanismus in Frage kommt, der über einen pneumatischen Antrieb betätigt werden kann.

Es liegt im Rahmen der vorliegenden Erfindung, anstelle des Balges 10 eine Tellerfeder einzusetzen, die ebenfalls unter der Last des Gewichtes 40 eines Containers 30 entweder eine Verriegelungseinrichtung durch direkten mechanischen Antrieb betätigt oder aber auf einen geschlossenen Druckraum so einwirkt, dass der entsprechende pneumatische Druck erzeugt wird, um einen Pneumatikzylinder in der bereits beschriebenen Art und Weise zu betätigen.

Der Entriegelungsvorgang über die Rastsperre 50 kann bei einem Bahnfahrzeug beispielsweise durch eine Art Bake mit einem ausfahrbaren Teil betätigt werden, die in der Nähe des Gleises aufgestellt ist. Von einer bestimmten Höhe an kann diese Bake bzw. der ausfahrbare Teil auf den Rastteil einwirken, wenn der Zug an dieser Stelle vorbeifährt. Befindet sich der einstellbare Teil in der anderen Position, findet keine Einwirkung auf den Rastteil 50 statt und die vorbei geführten Container bleiben in der verriegelten Lage.

Es ist auch denkbar, durch eine Art optische Anzeige anzuzeigen, ob nun Container sich in der verriegelten oder in der entriegelten Lage auf einem Bahnfahrzeug befinden.

Wenngleich im Zusammenhang mit der vorliegenden Erfindung jeder Betätigungsmechanismus für den Verriegelungsteil oder Verriegelungszapfen 14 eine Containereckbeschlagverriegelung 12 in Frage kommt, wird nachfolgend schematisch eine Ausführungsform beschrieben.

Der Mechanismus 15 zur Betätigung des Verriegelungszapfens 14 besteht aus einem pneumatischen Zylinder 21, der über eine Druckmittelleitung 18 mit Druckmittel versorgt werden kann. Unter Einwirkung des eingeleiten Druckes wird dann die Kolbenstange 22 des Kolbens der Kolbenzylinderanordnung 21 ausgefahren und aus dieser Ausfahrbewegung werden über einen Mechanismus 13 Bewegungen abgeleitet, die dazu führen, dass der Zapfen 14 nach oben angehoben wird, Seitenteile des Zapfens 14 nach rechts vorn bzw. links hinten ausgefahren werden, der Zapfen 14 abgesenkt wird, so dass, wenn er sich im Inneren eines Eckbeschlages befindet, der Eckbeschlag festgesetzt werden kann.

Die entgegen gerichteten Bewegungen erden dadurch bewerkstelligt, dass über die Leitung 18 die Kolbenzylinderanordnung 21 Druckluft gemacht wird und die beiden Federn 23 und 24 die Kolbenstange 22 wieder einfahren, so dass nunmehr die Seitenteile des Verriegelungszapfens 14 wieder eingefahren werden und der Verriegelungszapfen 14 nach unten verfahren wird.

Für die vorliegende Erfindung ist die im Einzelnen vorgenommene Bewegungsumwandlung zwar erforderlich jedoch nicht der Kernpunkt der vorliegenden Erfindung. Die vorliegende Erfindung manifestiert sich darin, dass eine Betätigung des Verriegelungszapfens 14 über Druckmittel bewerkstelligt wird, wobei dieses Druckmittel unter der Last des zu verriegelnden Containers durchgeführt wird. Soll ein verriegelter Container freigegeben werden, so wird nicht allein die Anlage drucklos gemacht, sondern es muss eine Betätigung der Verriegelung der Kolbenstange 22 durchgeführt werden, damit die Kraft der Federn 23 und 24 den Kolben 22 einfahren kann. Dies bedeutet für die Praxis, dass das System, wenn es erst einmal drucklos ist, noch nicht dazu führt, dass der verriegelte Container freigegeben wird. Es ist vielmehr ein zusätzlicher mechanischer Befehl oder ein auf andere Weise eingeleiteter Befehl erforderlich, der die verriegelte oder blockierte Kolbenstange 22 frei gibt.

Handelt es sich um den Einsatz bei einem Schienenfahrzeug, so kann zunächst einmal ein Container allein dadurch verriegelt werden, dass er an der richtigen Stelle auf die Plattform aufgesetzt wird und die angesprochenen Verriegelungseinrichtungen üben ihre Tätigkeit auf Grund der Belastung des Balges 10 aus.

Soll der Container aus der verriegelten Position von einem Schienenfahrzeug abgenommen werden, so kann dies nicht dadurch erfolgen, dass der Container angehoben wird, da zuvor dieser Entriegelungsvorgang durchgeführt werden muss. Bei Schienenfahrzeuge könnte also im Bereich der Schienenfahrzeuge eine Art Bake vorgesehen sein, die in der wirksamen Stellung auf den Verriegelungsteil 50 dahingehend einwirkt, dass er die blockierte Kolbenstange 22 frei gibt. Befindet sich hingegen die Bake nicht auf dieser angehobenen Position, sondern beispielsweise in der eingefahrenen Lage, so findet diese Betätigung nicht statt und der Container bleibt auf dem Fahrzeug verriegelt. Der Einsatz einer solchen Bake ermöglicht, das in einem bestimmten Bereich die Container von einem Zug mit Hilfe einer Kraneinrichtung abgenommen werden können, ohne dass es hierzu keiner weiteren Tätigkeiten des Personals bedarf.

Mit Hilfe der Vorrichtung gemäß der Erfindung kann sichergestellt werden, dass ein Container, wenn er sich auf einem Bahnfahrzeug befindet, verriegelt ist und so lange in der verriegelten Lage verbleibt, bis ein zusätzlicher von außen her kommender Befehl erteilt und ausgeführt wird.

## Patentansprüche

1. Vorrichtung zur Verriegelung eines Containers auf der Ladefläche eines Straßenfahrzeuges oder eines Eisenbahntragwagens, aufweisend mindestens einen Verriegelungszapfen oder -kopf, der in entriegeltem Zustand über eine der Öffnungen in einem der Eckbeschläge des Containers einführbar und in verriegeltem Zustand den Container über die Öffnung des Eckbeschlages hintergreifende Vorsprünge sichert und aufweisend einen Mechanismus zur Betätigung des Verriegelungszapfens, **dadurch gekennzeichnet, dass** auf der Ladefläche des Fahrzeuges mindestens ein auf das Gewicht eines aufgesetzten Containers ansprechender 'Weg-Kraft-Wandler (10) angeordnet ist, dessen Kraft zur Betätigung des Verriegelungszapfens einsetzbar ist.

2. Vorrichtung nach Anspruch 1, **dadurch gekennzeichnet, dass** der Weg-Kraft-Wandler als Balg (10) ausgebildet, auf dessen nach oben weisende Fläche der Container (31) aufsetzbar ist.

3. Vorrichtung nach Anspruch 2, **dadurch gekennzeichnet, dass** der Balg (10) strömungsmäßig mit einem von außen her zu öffnenden Rückschlagventil (20) ausgebildet ist.

4. Vorrichtung nach Anspruch 1, **dadurch gekennzeichnet, dass** der Weg-Kraft-Wandler als Spiralfeder oder Tellerfeder ausgebildet ist und bei Belastung durch einen Container (31) die Kraft zur Betätigung des Verriegelungszapfens liefert.

## Claims

1. A device for locking a container on the loading area of a road vehicle or a railway goods transporting waggon, having at least one twistlock or locking head, which in the unlocked state is insertable via one of the openings in one of the corner fittings of the container and in the locked state secures the container via projections engaging behind the opening of the corner fitting, and having a mechanism for actuating the twistlock, **characterised in that** at least one displacement-force converter (10) responsive to the weight of a placed-on container is arranged on the loading area of the vehicle, the force of which converter can be used to actuate the twistlock.

2. A device according to claim 1, **characterised in that** the displacement-force converter is in the form of bellows (10) on the upwardly-directed surface of which there can be placed the container (31).

3. A device according to claim 2, **characterised in that** flow-wise the bellows (10) is formed with a non-return valve (20) to be opened from the exterior.

4. A device according to claim 1, **characterised in that** the displacement-force converter is in the form of a coil spring or disc spring and in the event of loading by a container (31) supplies the force for actuation of the twistlock.

## Revendications

1. Dispositif de verrouillage d'un conteneur sur un plateau de chargement d'un véhicule routier ou d'un wagon de chemin de fer, lequel dispositif comprend au moins un boulon de verrouillage ou une tête de verrouillage qui, en position déverrouillée, peut être introduit(e) dans une équerre du container en passant à travers une des ouvertures et qui, en position verrouillée, sécurise le container au moyen de saillies saisissant par derrière l'ouverture de l'équerre, et comprend un mécanisme pour actionner le boulon de verrouillage, **caractérisé en ce qu'**au moins un transducteur déplacement-force (10) répondant au poids d'un conteneur posé dessus est disposé sur le plateau de chargement du véhicule et dont la force peut être utilisée pour actionner le boulon de verrouillage

2. Dispositif selon la revendication 1, **caractérisé en ce que** le transducteur déplacement-force est conçu sous la forme d'un soufflet (10) sur la face orientée vers le haut duquel peut être posé le conteneur (31).

3. Dispositif selon la revendication 2, **caractérisé en ce que** le soufflet (10), d'un point de vue fluidique, est pourvu d'une valve anti-retour (20) pouvant être ouverte de l'extérieur.

4. Dispositif selon la revendication 1, **caractérisé en ce que** le transducteur déplacement-force est conçu sous la forme d'un ressort en spirale ou d'un ressort à disques et qui fournit la force pour l'actionnement du boulon de verrouillage lorsqu'il est soumis à la charge d'un conteneur (31).
